# EUROPEAN PATENT APPLICATION

(11) **EP 4 826 670 A1**
(43) Date of publication of application: **21.10.2026**
(21) Application number: 26164086.6
(22) Date of filing: 11.03.2026
(51) Int. Cl.: G06V 10/62, G06V 20/58, G06V 20/64

(54) **SYSTEM AND METHOD FOR DETERMINING OBJECT COORDINATES IN AN ENVIRONMENT**

(30) Priority: 17.04.2025 GB 202505802
(71) Applicant: AUMOVIO Autonomous Mobility Germany GmbH, 85057 Ingolstadt (DE)
(72) Inventor: Halder, Ritesh Kumar, 560100 Bangalore (IN); Müller, Johannes, 88131 Lindau (DE); Kannan, Srividhya, 560100 Bangalore (IN)
(74) Representative: Aumovio Corporation

(57) **Abstract**

Disclosed is a method (100) for determining object coordinates in an environment. The method (100) comprises receiving asynchronous event data for the environment from an event-based vision sensor (300); generating a temporal-spatial tensor representation from the received asynchronous event data by sampling a predetermined number of latest non-zero positions in a temporal dimension at each spatial position; generating temporal features by processing the temporal-spatial tensor representation through a bifurcated temporal processing module; generating spatial-temporal features from the temporal features using a recurrent transformer comprising multiple sequential transformer blocks; determining object locations in pixel coordinates based on the generated spatial-temporal features; and determining coordinate information for objects by converting determined object locations from the pixel coordinates to world coordinates.

## Description

### FIELD

The present invention relates generally to object detection systems and methods, and more particularly to a method and system for determining object coordinates in an environment using event-based vision sensors and tensor-based event representation for high-speed object detection applications.

### BACKGROUND

Event-based vision sensors represent a fundamental advancement in imaging technology, operating on principles distinct from conventional frame-based image acquisition systems. These sensors generate asynchronous event data in response to local pixel-level changes in light intensity, producing discrete temporal events rather than synchronized frame sequences. Each event comprises specific data parameters including timestamp information, pixel coordinates, polarity values, and resolution parameters, enabling high-speed visual data acquisition with microsecond temporal precision.

In applications requiring real-time object coordinate determination, particularly in dynamic environments, conventional imaging systems face significant technical limitations. For instance, in autonomous vehicle applications and pedestrian safety systems, the ability to detect and track objects, particularly pedestrians, in real-time presents significant challenges. Traditional frame-based cameras operating at standard frame rates introduce substantial processing delays, typically 33 milliseconds per frame at 30 frames per second. This inherent latency becomes particularly problematic in scenarios requiring rapid object detection and coordinate determination, such as pedestrian safety systems and autonomous navigation applications where immediate response times are crucial for system effectiveness.

Current technical solutions employ various sensing modalities including radar systems, light detection and ranging (LiDAR) devices, and conventional frame-based cameras. These systems typically process environmental data through standard computer vision algorithms and neural network architectures designed for synchronous data streams. The conventional approaches often implement basic temporal integration methods to process sensor data and determine object coordinates through standard perspective transformation techniques.

However, existing solutions exhibit significant technical constraints. Frame-based imaging systems suffer from limited dynamic range capabilities and motion blur effects during high-speed object movement. LiDAR and radar systems, while providing direct distance measurements, generate spatially sparse data points and operate within fixed scanning frequencies. Additionally, current object detection implementations predominantly utilize simple continuous event representations that do not effectively leverage the asynchronous nature and high temporal resolution of event-based sensor data, resulting in suboptimal temporal feature extraction and coordinate determination accuracy.

Therefore, there exists a need for an improved object detection system that can effectively utilize the high temporal resolution and asynchronous nature of event-based vision sensors while maintaining computational efficiency and detection accuracy in dynamic environments.

### SUMMARY

The present invention aims to provide a method and system for determining object coordinates in an environment using event-based vision sensors. The method incorporates tensor-based event representation and advanced temporal-spatial processing techniques to achieve high-speed object detection with reduced latency.

In one aspect, the invention provides a method for determining object coordinates that includes receiving asynchronous event data from an event-based vision sensor and generating a temporal-spatial tensor representation by sampling a predetermined number of latest non-zero positions in a temporal dimension at each spatial position. The method further processes this representation through a bifurcated temporal processing module and a recurrent transformer comprising multiple sequential transformer blocks to generate spatial-temporal features for object detection.

The temporal-spatial tensor representation preserves both spatial and temporal information while maintaining polarity values, enabling asynchronous processing according to event triggering frequency. This representation incorporates event timestamp information, event pixel coordinates, event polarity data, and resolution parameters.

In another aspect, the invention implements a novel approach to temporal feature processing through a bifurcated temporal processing module that directly provides temporal features to the recurrent transformer without implementing a multilayer perceptron layer, thereby improving processing efficiency while maintaining feature quality.

The system achieves coordinate determination through a multi-stage process involving perspective transformation for converting pixel coordinates to world coordinates, applying linear motion modelling for trajectory estimation, and coordinate refinement based on the estimated trajectories.

### BRIEF DESCRIPTION OF DRAWINGS

A more complete appreciation of the present invention and many of the attendant aspects thereof will be readily obtained as the same becomes better understood by reference to the following description when considered in connection with the accompanying drawings:
FIG. 1 is a flowchart of a method for determining object coordinates in an environment, in accordance with one or more embodiments of the present invention;
FIG. 2 is a block diagram representation of a system for determining object coordinates in an environment, in accordance with one or more embodiments of the present invention;
FIG. 3 illustrates a typical setup of an event camera implementation, in accordance with one or more embodiments of the present invention;
FIG. 4 is a block diagram illustrating processing pipeline of an object detection algorithm, in accordance with one or more embodiments of the present invention; and
FIG. 5 depicts an exemplary output from the object detection algorithm showing object detection and tracking results, in accordance with one or more embodiments of the present invention.

### DETAILED DESCRIPTION OF THE INVENTION

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, a computer program, and a computer-readable medium for determining object coordinates in an environment are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

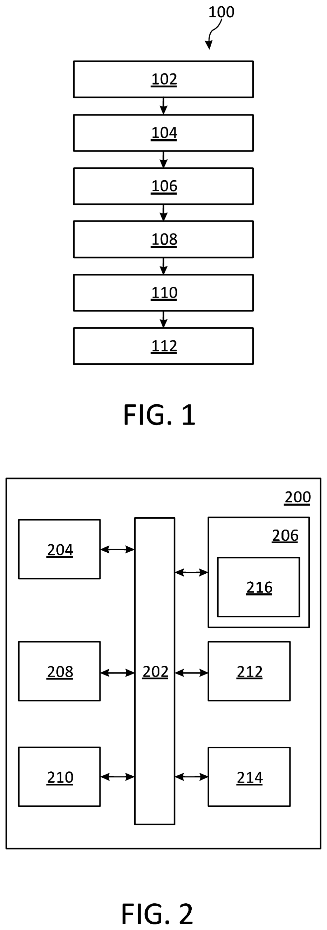

Referring to FIG. 1, illustrated is a flowchart of a method (as represented by reference numeral 100) for determining object coordinates in an environment, in accordance with an embodiment of the present invention. The method 100 of the present disclosure is implemented using an event-based vision sensor. As used herein, the "object coordinates" include spatial position data of detected objects relative to the event-based vision sensor, in which the objects may include pedestrians, vehicles, or other moving entities in the field of view of the event-based vision sensor. The environment comprises a physical space within the detection range of the event-based vision sensor, typically extending to 30 meters from the sensor position. The environment may include roadways, pedestrian walkways, intersections, and surrounding infrastructure.

The method 100 for determining object coordinates in an environment processes asynchronous event data received from an event-based vision sensor to generate a temporal-spatial tensor representation. The temporal-spatial tensor representation comprises structured data arrays incorporating event timestamp information, event pixel coordinates, event polarity data, and event resolution parameters. The method processes the temporal-spatial tensor representation through multiple sequential processing stages to generate spatial-temporal features, determine object locations in pixel coordinates, and convert the determined object locations to world coordinates. The processing stages implement specific data transformation operations to maintain temporal ordering of events while enabling efficient parallel processing of spatial information for coordinate determination.

Referring to FIG. 2, illustrated is a block diagram of a system 200 for determining object coordinates in an environment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer program programmed for determining object coordinates in an environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer-readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for determining object coordinates in an environment. In particular, the memory unit 206 includes an object coordinates determination module 216 to perform steps for the said purpose.

Referring to FIGS 1-2 in combination, various steps of the method 100 (as described hereinafter), which may be executed in the system 200, or specifically in the processing unit 204 of the system 200, for determining object coordinates in an environment, are described. It may be appreciated that although the method 100 is illustrated and described as a sequence of steps, it may be contemplated that various embodiments of the method 100 may be performed in any order or different combinations, and need not include all of the illustrated steps.

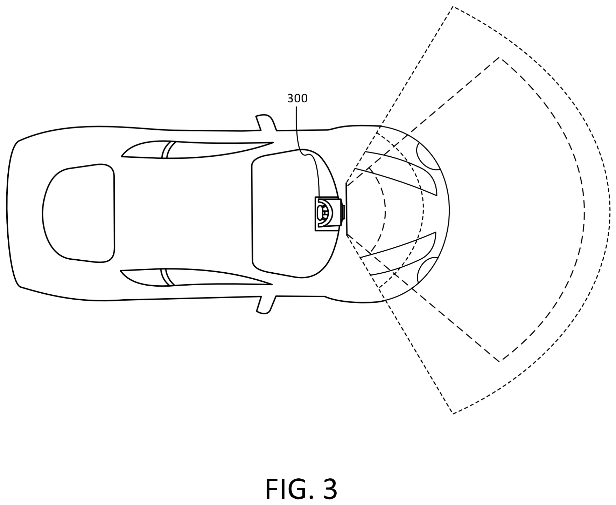

At step 102, the method 100 comprises receiving asynchronous event data for the environment from an event-based vision sensor. Referring to FIG. 3, a configuration implementing an event-based vision sensor (as represented by reference numeral 300) is illustrated. As shown, the event-based vision sensor 300 is mounted on a vehicle to receive asynchronous event data from the environment. The event-based vision sensor 300 may include an array of independent pixels that respond to changes in logarithmic light intensity. The mounting configuration of the event-based vision sensor 300 provides a field of view (FOV) extending outward from the front of the vehicle. The FOV encompasses the forward viewing area for detecting pedestrians and other objects in the environment.

The event-based vision sensor 300 operates on the principle of asynchronous event generation, where each pixel independently responds to logarithmic changes in light intensity. When the change in logarithmic intensity at a pixel location exceeds a predetermined threshold value, typically ±15% of the previous intensity value, the sensor generates an event. Each event e is characterized by a tuple (x, y, t, p), where (x, y) represents the pixel coordinates, t denotes the timestamp with microsecond precision, and p indicates the polarity (±1) corresponding to increasing or decreasing intensity changes.

The asynchronous event data received from the event-based vision sensor 300 maintains temporal precision without being constrained to fixed frame rates. This enables continuous monitoring of the environment with minimal latency between object motion and event generation. The independent operation of each pixel in the event-based vision sensor 300 allows for efficient data generation focused specifically on areas of the scene where intensity changes occur.

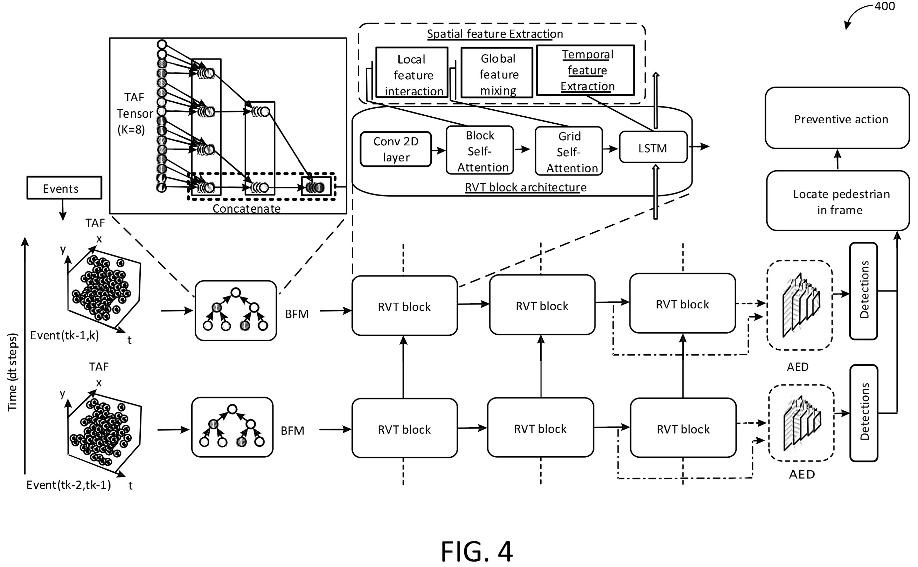

At step 104, the method 100 comprises generating a temporal-spatial tensor representation from the received asynchronous event data by sampling a predetermined number of latest non-zero positions in a temporal dimension at each spatial position. Referring now to FIG. 4, illustrated is a tensor-based event processing architecture 400. Herein, the asynchronous event data (represented as "Events") is received and processed through multiple stages to generate a temporal-spatial tensor representation. The temporal-spatial tensor representation implements a Temporal Active Focus (TAF) sampling scheme that processes events at time intervals (tk-1,k) and (tk-2,tk-1) to capture temporal dynamics.

In present embodiments, generating the temporal-spatial tensor representation comprises generating a four-dimensional tensor comprising spatial coordinates, temporal information, and polarity values from the received asynchronous event data. That is, the TAF sampling operation generates a four-dimensional tensor $T ∈ {ℝ}^{∧} \left(H\times W\times K\times 2\right)$, in which: H and W correspond to spatial dimensions of the sensor array; and K represents the predetermined number of temporal positions (K=8 in the illustrated embodiment). Herein, the final dimension (2) accommodates positive and negative polarity values.

The temporal-spatial tensor representation maintains temporal ordering of events within each spatial coordinate position (x,y). Further, the method 100 involves implementing an adaptive temporal window at each spatial coordinate position based on event frequency. In the given example, the TAF tensor (K=8) samples the eight most recent non-zero positions in the temporal dimension at each spatial location, implementing adaptive temporal windows that adjust based on local event frequency. The sampling operation preserves both spatial relationships and temporal sequence information from the asynchronous event stream.

Further, as shown in FIG. 4, the TAF representation concatenates multiple temporal slices of event data. Each temporal slice comprises events occurring within specific time intervals (tk-1,k) and (tk-2,tk-1), where k represents the current time step. The temporal slices are processed through parallel pathways that maintain temporal ordering while enabling efficient parallel processing of spatial information.

The temporal-spatial tensor representation incorporates multiple data components structured to enable efficient event processing. Herein, the temporal-spatial tensor representation preserves spatial and temporal information from the asynchronous event data. The preservation of spatial and temporal information from the asynchronous event data is achieved through a four-dimensional tensor structure, where the spatial dimensions correspond to the sensor array resolution, K=8 temporal sampling positions maintain temporal sequence information, and the final dimension preserves binary polarity values. The temporal-spatial tensor representation also maintains polarity values through dedicated channels in the tensor structure. Further, the temporal-spatial tensor representation enables asynchronous processing according to event triggering frequency, which is implemented through adaptive temporal windows.

As per embodiments of the present disclosure, the temporal-spatial tensor representation integrates event timestamp information, event pixel coordinates, event polarity data, and event resolution parameters into a unified data structure. Herein, the event timestamp information comprises temporal markers (with resolution of about 1µs) indicating when each pixel exceeded the intensity change threshold. The timestamp values maintain strict temporal ordering within each spatial location. The event pixel coordinates represent the spatial location of each event within the sensor array. The event polarity data p indicates the direction of intensity change for each event. The event resolution parameters include the spatial dimensions and temporal sampling rate of the tensor structure. This structured representation enables subsequent processing stages to extract both spatial and temporal features while maintaining the asynchronous nature of the original event data.

At step 106, the method 100 comprises generating temporal features by processing the temporal-spatial tensor representation through a bifurcated temporal processing module. As illustrated in FIG. 4, the bifurcated temporal processing module (BFM) processes the temporal-spatial tensor representation to generate temporal features through a specialized processing pipeline. The BFM receives the four-dimensional tensor T(x,y,t,p) from the TAF representation and implements a bifurcated processing structure that operates on the temporal dimension while maintaining spatial coherence.

Herein, the processing through the bifurcated temporal processing module comprises processing temporal dimension data through a fully connected layer. This is done within the BFM, which comprises operating on K temporal positions at each spatial location (x,y). The fully connected layer processes the temporal dimension values, implementing weight connections between temporal positions. The fully connected layer maintains the polarity information while transforming the temporal data according to the mapping function f(T) = W·T + b, where W represents the weight matrix and b denotes the bias term. The method 100 further comprises progressively aggregating the processed temporal dimension data at adjacent temporal positions. This step implements a hierarchical combining operation. For each spatial location (x,y), the BFM aggregates temporal data from adjacent positions according to the temporal distance between events. The aggregation operation combines temporal features from positions k and k+1 using a weighted average operation. The method 100 further comprises assigning weights to the aggregated data based on temporal recentness thereof. This step implements an exponential decay function applied to the temporal positions. For each temporal position k, the weight is computed. The employed weighting scheme assigns higher importance to more recent temporal information while maintaining a continuous representation of the temporal evolution of events.

At step 108, the method 100 comprises generating spatial-temporal features from the temporal features using a recurrent transformer comprising multiple sequential transformer blocks. As illustrated in FIG. 4, the spatial-temporal feature generation implements a recurrent transformer comprising three sequential RVT (Recurrent Vision Transformer) blocks. Each RVT block processes temporal features through a structured pipeline that includes local feature interaction, global feature mixing, and temporal feature extraction stages. The RVT blocks operate sequentially, with each block taking the output features from the previous block as input.

Herein, generating spatial-temporal features comprises processing the temporal features using a convolutional neural network to arrange pixels in two-dimensional grids in a computational graph. The convolutional neural network processing stage arranges pixels in two-dimensional grids through a Conv2D layer implementation. The Conv2D layer processes the temporal features with kernel size 3×3 and stride value 2. The computational graph arrangement enables parallel processing of spatial relationships while maintaining the temporal coherence established by the BFM. The Conv2D layer generates feature maps at different spatial resolutions through progressive down-sampling operations. The method 100 further includes transforming the arranged pixels through multi-axis self-attention layers to generate transformed features. The transformation of arranged pixels through multi-axis self-attention layers implements a Block Self-Attention mechanism as shown in the RVT block architecture of FIG. 4. The method 100 further includes applying self-attention operations on the transformed features to extract global spatial features. The application of Grid Self-Attention operations on transformed features extracts global spatial features through an attention mechanism. The global feature extraction operates on the entire feature map to capture long-range spatial dependencies. The LSTM component, as shown in FIG. 4, processes these global features sequentially, maintaining temporal state information across multiple time steps. The LSTM state from the previous time step is utilized to compute features for the next processing stage, with the results being saved for subsequent timesteps in the processing pipeline.

As used herein, the convolutional neural network (CNN) is a multi-layered feed-forward neural network, made by stacking many hidden layers on top of each other in sequence. The sequential design may allow convolutional neural networks to learn hierarchical features. The hidden layers are typically convolutional layers followed by activation layers, some of them followed by pooling layers. The CNN may be configured to identify patterns in data. The convolutional layer may include convolutional kernels, that are used to look for patterns across the input data. The convolutional kernel may return a large positive value for a portion of the input data that matches the kernel's pattern or may return a smaller value for another portion of the input data that does not match the kernel's pattern. The CNN may be able to extract informative features from the training data without the need for manual processing of the training data. The CNN may produce accurate results where large unstructured data is involved, such as image classification, speech recognition and natural language processing. Also, CNN is computationally efficient, as it is able to assemble patterns of increasing complexity using the relatively small kernels in each hidden layer.

According to embodiments of the present disclosure, the recurrent transformer processes the temporal features through three sequential transformer blocks. As illustrated in FIG. 4, the recurrent transformer implements a three-block sequential processing architecture, with each transformer block performing specialized attention operations. The sequential arrangement enables progressive refinement of spatial-temporal features through hierarchical processing stages. Herein, a first transformer block implements spatial self-attention processing on the temporal features. The first transformer block receives temporal features from the bifurcated temporal processing module and implements spatial self-attention processing, which computes attention weights. This operation captures spatial relationships while maintaining the temporal structure of the input features. A second transformer block implements combined spatial and temporal attention processing on output from the first transformer block. The combined attention mechanism processes both spatial and temporal dimensions simultaneously through a unified attention operation. This block enables the integration of spatial relationships with temporal dependencies. A third transformer block implements refined temporal attention processing on output from the second transformer block to generate the spatial-temporal features. This block generates spatial-temporal features through focused temporal attention operations. The output features incorporate refined temporal dependencies while maintaining spatial coherence.

In present embodiments, the bifurcated temporal processing module processes the temporal-spatial tensor representation by directly providing the temporal features to the recurrent transformer without implementing a multilayer perceptron layer. That is, the BFM implements a direct connection architecture that provides temporal features to the recurrent transformer without an intervening multilayer perceptron layer. This architectural modification, as shown in FIG. 4 where the BFM output connects directly to the first RVT block, reduces computational complexity while maintaining feature quality through the subsequent transformer processing stages. The removal of the multilayer perceptron layer eliminates redundant feature transformation operations that are effectively handled by the transformer blocks.

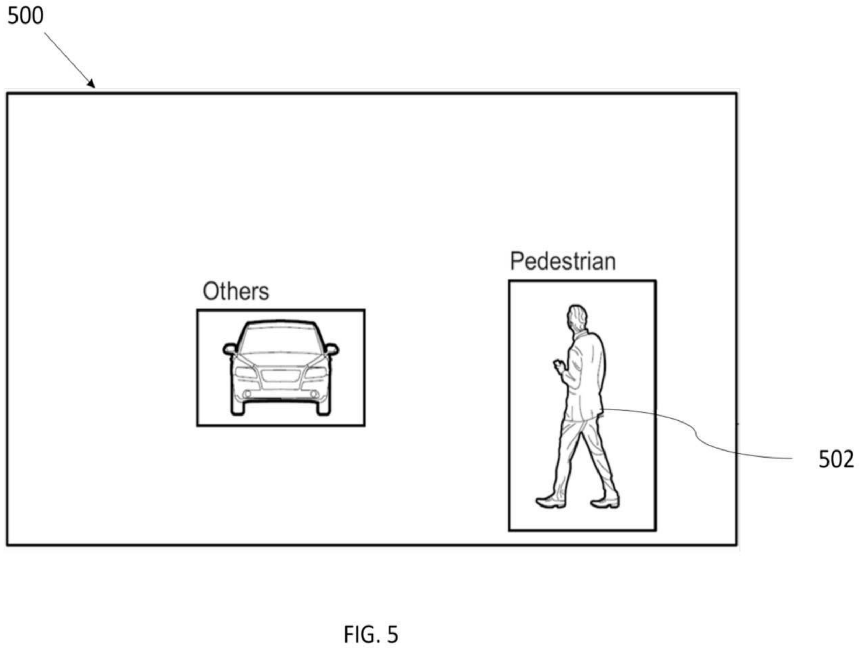

At step 110, the method 100 comprises determining object locations in pixel coordinates based on the generated spatial-temporal features. Referring to FIG. 4, the determination of object locations in pixel coordinates processes the spatial-temporal features through an Agile Event Detector (AED) architecture. The AED implements a Feature Pyramid Network (FPN) structure that operates on the spatial-temporal features generated by the third RVT block to produce object detection outputs at multiple spatial scales. FIG. 5 illustrates exemplary detection output (as represented by reference numeral 500) from the event-based detection system implementing the object location determination in pixel coordinates. The detection output displays event data as white points against a black background, where each point represents an individual event generated by the event-based vision sensor. The detection system implements bounding box localization with confidence scores for multiple object classes. A pedestrian detection is shown with a bounding box and associated confidence score of 0.8, indicating high detection confidence. An additional object is detected with a confidence score of 0.9, demonstrating multi-object detection capability. The scattered event points surrounding the detected objects represent asynchronous events generated by the event-based vision sensor in response to intensity changes in the scene. The pixel coordinates of the bounding boxes provide spatial localization of detected objects within the field of view of the event-based vision sensor 300, enabling subsequent coordinate transformation to world coordinates for distance and trajectory estimation.

In present embodiments, determining object locations comprises processing the generated spatial-temporal features through an event detector configured for high inference speed to generate initial object detection data. The processing of the spatial-temporal features through the event detector includes implementation of detection heads operating on feature maps at multiple scales. The AED processes the generated spatial-temporal features through a high-speed inference pipeline optimized for asynchronous event data processing. For each spatial location, the detection head outputs classification scores for object categories, bounding box coordinates relative to predefined anchors, and object confidence scores. The method 100 further includes refining the initial object detection data based on temporal resolution of the asynchronous event data. The refinement of initial object detection data implements adaptive temporal processing based on the timing information (microsecond-resolution) from the asynchronous event data. The detection refinement process maintains separate detection pathways as shown in FIG. 4, where parallel AED modules process temporal sequences of spatial-temporal features to generate and refine object detections. The refinement process incorporates temporal consistency checks across multiple detection windows, where each window corresponds to a temporal slice of event data. The temporal resolution of the asynchronous event data enables precise tracking of object motion between detection windows, allowing for refinement of object locations based on temporal coherence of detected features.

In some embodiments, the method 100 further includes performing event-based data augmentation. This involves implementing temporal jittering operations on the asynchronous event data while maintaining temporal causality, executing polarity flipping operations while maintaining temporal-spatial consistency, and performing spatial warping through perspective transformation matrices while maintaining event timing relationships. The AED architecture incorporates data augmentation methods including implementing temporal jittering operations on the asynchronous event data while maintaining temporal causality, executing polarity flipping operations while maintaining temporal-spatial consistency, and performing spatial warping through perspective transformation matrices while maintaining event timing relationships. Such operations may be contemplated by a person skilled in the art and thus not described further herein. These augmentation techniques enhance the robustness of object location determination while preserving the temporal precision inherent in the asynchronous event data.

At step 112, the method 100 comprises determining coordinate information for objects by converting determined object locations from the pixel coordinates to world coordinates. Referring to FIG. 4, the determination of coordinate information implements a coordinate transformation pipeline for converting pixel coordinates to world coordinates. The coordinate transformation process incorporates perspective transformation matrices and linear motion modelling for trajectory estimation. The transformation from pixel coordinates to world coordinates utilizes camera calibration parameters including the intrinsic camera matrix K, rotation matrix R, and translation vector t. The perspective transformation matrix P enables conversion of pixel coordinates (u,v) to world coordinates (X,Y,Z) through application of geometric transformations that account for the camera position and orientation relative to the detected objects.

Herein, determining coordinate information comprises estimating distances of the detected objects based on temporal variations in the determined object locations. The estimation of object distances utilizes temporal variations in detected object locations through analysis of bounding box measurements across sequential detection windows. The distance estimation process implements a linear motion model based on temporal changes in object size and position within the field of view. The distance D to a detected object is computed based on the relationship between focal length f, assumed real-world object height H_real, and measured object height in pixels H_pixel. The temporal consistency of distance estimates is maintained through integration of multiple measurements across sequential detection windows. The method 100 further includes determining world coordinates of the objects based on the estimated distances. This process is performed in conjunction with pixel coordinate information to generate three-dimensional position data in the world reference frame. The world coordinate computation applies perspective transformation to the pixel coordinates using calibrated camera parameters. It may be understood that the coordinate determination process maintains temporal coherence through sequential updating of position estimates based on new detection data.

Herein, determining coordinate information further comprises implementing perspective transformation to convert the pixel coordinates to initial world coordinates. The perspective transformation utilizes a calibrated transformation matrix to convert pixel coordinates (u,v) to initial world coordinates (X,Y,Z), where K represents the intrinsic camera parameters, R denotes the rotation matrix, and t indicates the translation vector defining the camera position relative to the world reference frame. The method 100 further includes applying linear motion modelling on the initial world coordinates for estimating trajectories. The linear motion modelling stage processes the initial world coordinates through a state estimation framework that incorporates position and velocity components. The state vector represents object position and velocity in world coordinates, enabling trajectory estimation through sequential state updates. The method 100 further includes refining the world coordinates based on the estimated trajectories. The refinement of world coordinates implements trajectory-based optimization utilizing the estimated motion parameters. The refinement process integrates multiple coordinate measurements across temporal windows to enhance position accuracy through statistical filtering of coordinate estimates.

The complete coordinate determination process enables conversion of detected object locations from image space to physical space coordinates, facilitating subsequent tracking and trajectory estimation operations. The world coordinate representation provides metric measurements suitable for implementation of preventive actions based on detected object positions and movements within the environment. The coordinate transformation pipeline integrates with the object detection framework shown in FIG. 4, utilizing the transformed coordinates to provide position information for preventive action determination. This integration enables real-time tracking and response capabilities based on precise world coordinate measurements of detected objects.

The present method 100 for determining object coordinates in an environment using event-based vision sensors implements significant technological advancements in object detection and coordinate determination. The method 100 introduces a temporal-spatial tensor representation that preserves both spatial and temporal information from asynchronous event data while maintaining polarity values and enabling asynchronous processing according to event triggering frequency. The bifurcated temporal processing module processes the temporal-spatial tensor representation by directly providing temporal features to the recurrent transformer without implementing a multilayer perceptron layer, thereby reducing computational complexity while maintaining feature quality. The recurrent transformer implements three sequential transformer blocks that progressively refine spatial-temporal features through specialized attention mechanisms.

The present method 100 demonstrates substantial advantages over conventional object detection approaches. Where traditional frame-based systems operate at fixed 30 frames per second introducing 33-millisecond processing delays, the present method 100 processes asynchronous event data with microsecond temporal resolution. The temporal-spatial tensor representation enables efficient processing of event data without the motion blur and dynamic range limitations inherent in frame-based approaches. The method 100 overcomes the sparsity limitations of conventional radar and LiDAR systems through dense event-based sampling while maintaining computational efficiency through optimized tensor processing and transformer architectures. The coordinate transformation pipeline implements precise object localization through integration of temporal variations in object detection, enabling accurate distance estimation and world coordinate determination based on sequential measurements.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### REFERENCE SIGNS

| | |
|---|---|
| method | 100 |
| step | 102 |
| step | 104 |
| step | 106 |
| step | 108 |
| step | 110 |
| step | 112 |
| step | 114 |
| system | 200 |
| bus | 202 |
| processing unit | 204 |
| memory unit | 206 |
| interface | 208 |
| database | 210 |
| input device | 212 |
| output device | 214 |
| object coordinates determination module | 216 |
| event-based vision sensor | 300 |
| tensor-based event processing architecture | 400 |
| detection output | 500 |

## Claims

1. A method (100) for determining object coordinates in an environment, **charact erised in that**:
receiving asynchronous event data for the environment from an event-based vision sensor (300);
generating a temporal-spatial tensor representation from the received asynchronous event data by sampling a predetermined number of latest non-zero positions in a temporal dimension at each spatial position;
generating temporal features by processing the temporal-spatial tensor representation through a bifurcated temporal processing module;
generating spatial-temporal features from the temporal features using a recurrent transformer comprising multiple sequential transformer blocks;
determining object locations in pixel coordinates based on the generated spatial-temporal features; and
determining coordinate information for objects by converting determined object locations from the pixel coordinates to world coordinates.

2. The method (100) of any of preceding claims, wherein generating the temporal-spatial tensor representation comprises:
generating a four-dimensional tensor comprising spatial coordinates, temporal information, and polarity values from the received asynchronous event data;
maintaining temporal ordering of events within each spatial coordinate position; and
implementing an adaptive temporal window at each spatial coordinate position based on event frequency.

3. The method (100) of any of preceding claims, wherein processing through the bifurcated temporal processing module comprises:
processing temporal dimension data of the temporal-spatial tensor representation through a fully connected layer;
progressively aggregating the processed temporal dimension data at adjacent temporal positions; and
assigning weights to the aggregated data based on temporal recentness thereof.

4. The method (100) of claim 3, wherein the bifurcated temporal processing module processes the temporal-spatial tensor representation by directly providing the temporal features to the recurrent transformer without implementing a multilayer perceptron layer.

5. The method (100) of any of preceding claims, wherein generating spatial-temporal features comprises:
processing the temporal features using a convolutional neural network to arrange pixels in two-dimensional grids in a computational graph;
transforming the arranged pixels through multi-axis self-attention layers to generate transformed features; and
applying self-attention operations on the transformed features to extract global spatial features.

6. The method (100) of any of preceding claims, wherein the recurrent transformer processes the temporal features through three sequential transformer blocks comprising:
a first transformer block implementing spatial self-attention processing on the temporal features;
a second transformer block implementing combined spatial and temporal attention processing on output from the first transformer block; and
a third transformer block implementing refined temporal attention processing on output from the second transformer block to generate the spatial-temporal features.

7. The method (100) of any of preceding claims, wherein determining object locations comprises:
processing the generated spatial-temporal features through an event detector configured for high inference speed to generate initial object detection data; and
refining the initial object detection data based on temporal resolution of the asynchronous event data.

8. The method (100) of any of preceding claims, further comprising performing event-based data augmentation by:
implementing temporal jittering operations on the asynchronous event data while maintaining temporal causality;
executing polarity flipping operations while maintaining temporal-spatial consistency; and
performing spatial warping through perspective transformation matrices while maintaining event timing relationships.

9. The method (100) of any of preceding claims, wherein determining coordinate information comprises:
estimating distances of the detected objects based on temporal variations in the determined object locations; and
determining world coordinates of the objects based on the estimated distances.

10. The method (100) of any of preceding claims, wherein determining coordinate information further comprises:
implementing perspective transformation to convert the pixel coordinates to initial world coordinates;
applying linear motion modelling on the initial world coordinates for estimating trajectories; and
refining the world coordinates based on the estimated trajectories.

11. The method (100) of any of preceding claims, wherein the temporal-spatial tensor representation comprises:
event timestamp information;
event pixel coordinates;
event polarity data; and
event resolution parameters.

12. The method (100) of any of preceding claims, wherein the temporal-spatial tensor representation:
preserves spatial and temporal information from the asynchronous event data;
maintains polarity values; and
enables asynchronous processing according to event triggering frequency.

13. A system (200) determining object coordinates in an environment, comprising:
at least one processor; and
at least one memory including computer program code for one or more programs,
the at least one memory and the computer program code configured to, with the at least one processor, cause the system (200) to perform the method (100) according to one or more of claims 1 to 12.

14. A computer program comprising instructions which, when the program is executed by a computer, cause the computer to carry out a method (100) of any one of the claims 1 to 12.

15. A computer-readable medium having stored thereon the computer program of the claim 14.
